# EUROPEAN PATENT SPECIFICATION

(11) **EP 2 884 855 B1**
(45) Date of publication and mention of the grant of the patent: **11.07.2018**
(21) Application number: 14729199.1
(22) Date of filing: 05.02.2014
(51) Int. Cl.: A23L 29/212, A23L 7/126

(54) **CRUNCHY GRANOLA CLUSTERS AND PRODUCTS PREPARED THEREFROM**
KNUSPRIGE MÜSLIKLUMPEN UND DARAUS HERGESTELLTE PRODUKTE
PÉPITES DE CÉRÉALES DE TYPE GRANOLA CROQUANTES ET PRODUITS PRÉPARÉS À PARTIR DE CELLES-CI

(30) Priority: 05.02.2013 US 201361760810 P; 15.03.2013 US 201361787987 P; 04.02.2014 US 201414172369
(43) Date of publication of application: 24.06.2015
(73) Proprietor: The Quaker Oats Company, Chicago, IL 60661 (US)
(72) Inventor: COLEMAN, Christopher, M., Fox River Grove, IL 60021 (US)
(74) Representative: Jenkins, Peter David
(86) International application number: PCT/US2014/014871
(87) International publication number: WO 2014/124005

(56) References cited:
- EP-A2- 0 586 138
- WO-A1-03/011052
- WO-A1-2011/064242
- WO-A2-2007/084754
- US-A- 4 820 533
- US-A- 4 859 477
- US-A1- 2001 008 646
- US-A1- 2003 170 370
- US-A1- 2004 028 797
- US-A1- 2004 121 051
- US-A1- 2006 130 181
- US-A1- 2008 181 991
- US-A1- 2010 021 592
- US-B1- 6 287 621

## Description

### FIELD OF THE INVENTION

The invention relates to a formation of crunchy granola clusters which remain crunchy in contact with a liquid.

### BACKGROUND OF THE INVENTION

Cereal agglomeration processes and agglomerated cereal products are known such as described in US Pat. 6,800,310. Baked cereal pieces used for ready-to-eat cereals are likewise known such as described in US Pat. 5,093,146. Granola-based food products are described in US Pat. 6,387,426.

Hot cereals such as oatmeal or cream of wheat are also well known. Such cereals provide a hot, soft or creamy textured cereal when cooked on the stove or heated in the microwave. Such products are soft and creamy, not crunchy, as the liquid and heat tend to hydrate and soften the cereal flakes or particles.

EP-A-0586138 discloses a low or no fat granola cereal mix in which dry ingredients are coated by a coating syrup. US-A-5093146 discloses a ready-to-eat cereal in which a cereal-based dough is shaped to form dough pieces, then cooked by baking and then glazed with an aqueous glaze solution comprising sugar.

### BRIEF SUMMARY OF THE INVENTION

It is an objective to provide cereal products containing crunchy granola clusters that maintain their crunch in hot liquid for at least a period of time to allow consumption of the product.

It is an objective to provide cereal products containing crunchy granola clusters having improved binding properties for improved cluster formation, resulting in more uniform granola size with less breakage and fines.

It is an objective to provide cereal products containing crunchy granola clusters that maintain their crunch in dairy products such as cold milk and yogurt for at least a period of time to allow consumption of the product.

It is an objective to provide cereal products containing crunchy granola clusters that maintain have a more crunchy texture than prior granola products.

It is a further objective to provide cereal products containing granola that hydrates in hot liquid to provide a creamy granola product.

It is a further objective to provide cereal products containing both the crunchy clusters and creamy cereal in the same package. In particular, it is desired to have such products be heated in the microwave.

The present disclosure is directed to crunchy granola clusters having improved binding properties for cluster formation, resulting in uniform granola size with little breakage and fines.

The present invention is directed to crunchy granola clusters that may be added as a topping to prepared hot cereal and remain crunchy for at least six minutes.

The present invention is directed to crunchy granola clusters that may be added as a topping to yogurt and remain crunchy for at least six minutes.

The present invention is directed to crunchy granola clusters that may be combined with dry grain cereal in single-serve or multi-serve packages to provide multi-texture hot cereal upon the addition of a hot fluid or upon addition of a cold fluid and heating.

The present invention is directed to crunchy granola clusters that may be combined with dry grain cereal in single-serve or multi-serve packages to provide multi-texture cold, muesli cereal upon the addition of a cold milk or yogurt.

The present invention is directed to crunchy granola clusters for ready-to-eat cereals that remain crunchy after the addition of yogurt or milk.

The present invention is directed to crunchy granola clusters having improved crunchy texture for granola snack or snack mix.

The present disclosure is directed to a microwavable crunchy hot cereal having as much fiber and whole grains as instant oatmeal. The crunchy granola clusters stay crunchy when combined with a liquid and heated. The crunchy granola clusters are blended with a granola that absorbs milk to provide a creamy experience. The blend of granolas may be combined in a pouch such as single-serve pouch to maintain the ratio of granola types. Granola ratios may also be maintained in bulk multiserving containers by using similar cluster size in the crunchy and creamy granola clusters.

In an aspect of the present invention crunchy granola clusters according to claim 1.

Further aspects of the invention are directed to methods of making the crunchy granola clusters.

In another aspect of the present disclosure, a creamy granola is formed comprising flakes from at least one grain, at least one protein, sodium bicarbonate, and syrup.

In another aspect of the present invention a microwavable crunchy and creamy granola cereal is formed from a combination of the crunchy granola clusters and creamy granola, and optionally at least one of fruits or nuts.

Further aspects of the invention are directed to methods of making the creamy granola.

Further aspects of the description relate to forming a hot granola cereal by adding the crunchy and creamy granola cereal to a bowl, adding a liquid such as milk, and heating in a microwave oven.

The present invention provides crunchy granola clusters according to claim 1. In one embodiment, the coating syrup comprises a long chain polysaccharide, wherein the syrup comprises up to 30% by weight of the clusters. In a preferred embodiment, the long chain polysaccharide is selected from the group consisting of polydextrose, maltodextrin, oligofructose, inulin, or corn syrup solids.

In one embodiment, the flakes are selected from the group consisting of oat, wheat, corn, rye triticale, barley, quinoa and any combination thereof. In a preferred embodiment, the flakes are oat flakes and, optionally, wheat flakes.

In one embodiment, a cereal topping comprises the crunchy granola clusters described above wherein the clusters remain crunchy while in contact with a liquid for at least six minutes without getting soft. In another embodiment, the topping comprises 30% to 90% crunchy granola clusters.

In one embodiment, an oatmeal product comprises oatmeal prepared with a hot liquid and further comprising the topping described above. In another embodiment, a yogurt topping comprises the crunchy granola clusters of claim 1 wherein the clusters remain crunchy in contact with said yogurt for at least six minutes without getting soft. The yogurt topping may comprise 30% to 90% crunchy granola clusters. In still another embodiment, a yogurt product comprises yogurt and the topping described above.

In one embodiment, a multi-texture cereal comprises the crunchy granola clusters described above and dry grain flakes, wherein the dry grain flakes have a moisture level of 2%-13% by weight. In one embodiment, the dray grain flakes are selected from the group consisting of oats, wheat, barley, rye, quinoa and multigrain. In another embodiment, the crunchy granola clusters comprise 5% to 80% of the multi-texture cereal.

In one embodiment, a ready to eat cereal comprises the crunchy granola clusters described above wherein the crunchy granola clusters comprise 50% to 100% of the cereal.

In one embodiment, a microwavable crunchy and creamy granola cereal comprises crunchy granola clusters according to claim 1; and creamy granola comprising flakes from at least one grain, at least one protein, sodium bicarbonate, and syrup; and optionally at least one of fruits or nuts. The flakes may optionally be selected from the group consisting of oat, wheat, corn, rye triticale, barley, and any combination thereof.

In a preferred embodiment, the flakes are oat flakes and, optionally, wheat flakes. In another embodiment, the protein is selected from the group consisting of whey, whey protein concentrate, nonfat dried milk, and combinations thereof. In a preferred embodiment, the cereal comprises 50 to 70 wt% crunchy granola clusters, 30 to 50 wt% creamy granola, and 0 to 10 wt% fruits or nuts.

In another embodiment, a method of preparing a microwavable crunchy and creamy granola cereal comprises: forming crunchy granola clusters by combining dry ingredients comprising flakes from at least one grain, crisps from at least one grain, at least one protein, the protein being selected from the group consisting of whey, whey protein concentrate, non-fat dried milk and combinations thereof, and a cold water-swelling, granular starch that has an average hold viscosity of between 2 and 3 Pa.s (2000 and 3000 centipoise) and a final viscosity of greater than 5 Pa.s (5000 centipoise) when measured using the RVA Protocol, with coating syrup; and forming creamy granola by combining dry ingredients comprising flakes from at least one grain, at least one protein, and sodium bicarbonate, with syrup; and combining the crunchy granola clusters, creamy granola, and optionally at least one of fruits or nuts.

Also described is a method of preparing a hot crunchy and creamy granola cereal comprises forming crunchy granola clusters by combining dry ingredients comprising flakes from at least one grain, crisps from at least one grain, at least one protein, the protein being selected from the group consisting of whey, whey protein concentrate, non-fat dried milk and combinations thereof, and a cold water-swelling, granular starch that comprises an average hold viscosity of between 2 and 3 (2000 and 3000 centipoise) and a final viscosity of greater than 5 Pa.s (5000 centipoise) when measured using the RVA Protocol, with coating syrup; and forming creamy granola by combining dry ingredients comprising flakes from at least one grain, at least one protein, and sodium bicarbonate with syrup; combining the crunchy granola clusters, creamy granola, and optionally at least one of fruits or nuts to form the crunchy and creamy granola cereal; adding a liquid to the crunchy and creamy granola cereal; and heating in a microwave oven. Preferably, the liquid is milk.

### BRIEF DESCRIPTION OF THE DRAWINGS

Figure 1 depicts a diagrammatic flow chart of the preparation of the granola in accordance with an aspect of the invention.
Figure 2 depicts a flow chart of the preparation of a final cereal product in accordance with an aspect of the invention.
Figure 3 depicts a graphical representation of the bowl life of hot granola having various amounts of MIRA-GEL 463.

### DETAILED DESCRIPTION OF THE INVENTION

Various examples and aspects of the inventive subject matter disclosed here are possible and will be apparent to the person of ordinary skill in the art, given the benefit of this disclosure. In this disclosure reference to "some aspects," "certain aspects," "certain exemplary aspects" and similar phrases each means that those aspects are merely nonlimiting examples of the inventive subject matter, and there are alternative aspects which are not excluded.

It was discovered that one could maintain the crunch of granola clusters after heating with liquid such as milk, for example in a microwave, through the use of a cold water swelling, granular corn starch. The crunchy granola clusters have good binding properties and good crunchiness that is resistant to absorption of hot or cold liquids, remaining crunchy for several minutes after being combined with a liquid.

The present invention is therefore directed to crunchy granola clusters having improved binding properties for cluster formation, resulting in uniform granola size with little breakage and fines. The crunchy granola clusters stay crunchy in hot or cold liquids or yogurt for a period of time to be consumed. The crunchy granola clusters can also be part of a ready-to-eat snack.

The crunchy granola clusters are formed by combining a cold water swelling, granular corn starch with a granola dry mix which includes grain flakes, extruded crisp rice cereal pieces, and dairy components such as nonfat dry milk, whey, and whey protein concentrate, which ingredients are mixed and formed into granola clusters.

Cluster formation and crunchy texture may be improved by incorporating up to 30 wt%, for example 1 wt% to 30 wt%, or 10 wt% to 20 wt% , or 15wt%, of a long chain polysaccharide in the syrup (in place of sugar). Such long chain polysaccharides include, for example, polydextrose, maltodextrin, oligofructose, inulin, or corn syrup solids. Inclusion of long chain polysaccharides increases the syrup viscosity, which results in a stickier wet mix that forms more solid granola clusters.

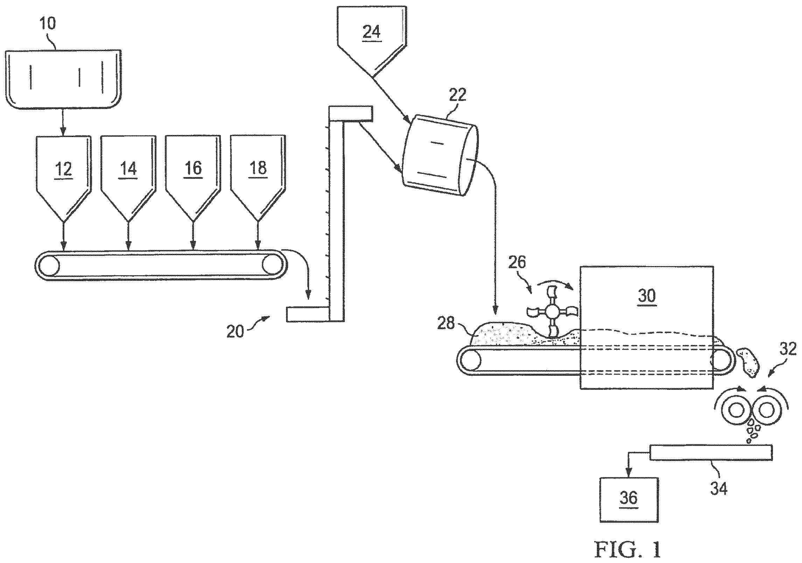

Attention is drawn to Fig. 1 which describes a process of forming granola in accordance with at least one aspect of the invention.

Dry ingredients are combined and mixed together in batch mixer 10 to form a dry mix. The dry mix may include any suitable mixture of protein ingredients such as nonfat dry milk, whey protein concentrate, whey, powdered milk, dried yogurt, sodium caseinate, zein, soy derivatives, and other starches. The dry mix also includes cold water swelling, granular corn starch.

The dry mix 12 is combined with flakes or crisps or other ingredients used in a granola product, for example oat flakes 14, wheat flakes 16, and crisp rice 18. It is noted that this formulation is exemplary only. Any suitable types of grain may be utilized for the flakes such as oat, wheat, corn, rye triticale, quinoa and barley. Likewise any suitable type of grain may be used to form the crisps such as oats, rice or corn. The resulting blend of dry ingredients is transferred 20 to enrober 22 such as a tumble drum having spray nozzles therein. Syrup from syrup tank 24 is sprayed on the blend via the nozzles. The temperature of the syrup is appropriate to dissolve syrup solids and provide a viscosity that allows for effective spraying, typically about 71°C (160°F).

The resulting syrup coated blend is transferred to a paddle spreader 26 to form a slab 28. The slab travels through an oven 30 and baked at 93 to 149°C (200 to 300°F), more typically, 129 to 138°C (265 to 280°F), until crisp or a moisture level of 1 to 8 wt%, typically 1 to 3 wt%. The slab may be any suitable thickness, but is typically 25.4 to 127 mm (1 to 5 inches) thick, more commonly 50.8 to 76.2 mm (2 to 3 inches) thick. The slab is then broken up using breaker rollers 32 and screened 34 to obtain the desired size of granola are collected in an appropriate container 36. The granola clusters are typically 4.7 to 25.4 mm (3/16 to 1 inch) in size.

It is noted that the process depicted in Figure 1 is not intended to limit the method steps or equipment used to create granola clusters. Clusters may also be formed by, for example, panning, molding or otherwise mechanically forming the ingredients into clusters.

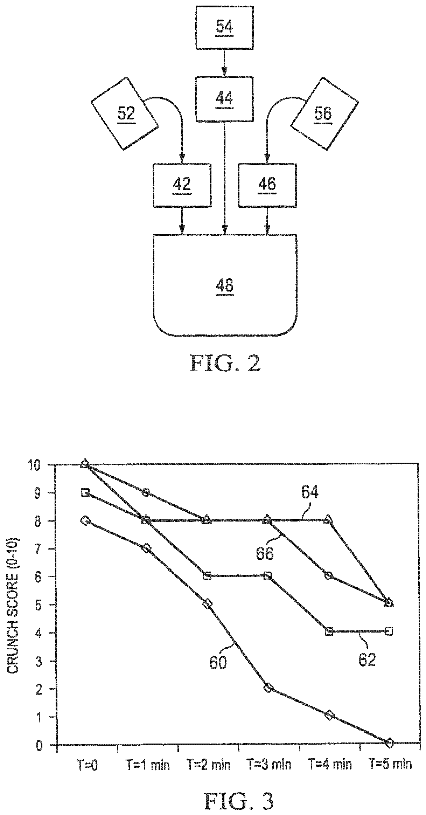

As shown in FIG. 2, feeders 42, 44, and 46 are used to feed the granola clusters 52, fruits and/or nuts 54, and granola blend 56 into a packages 48 for distribution. In one aspect the packages are single serving pouches.

### Crunchy Granola Clusters

The crunchy granola clusters may be prepared following the process described for FIG. 1 using a cold water swelling, granular corn starch. A crunchy texture is desired after heating in milk in a microwave oven. Such crunchier texture is achieved by stronger cluster binding that slows hydration and cluster disintegration.

The corn starch increases the strength of the granola cluster, so that it stays crunchy (is slow to hydrate and dissolve) after microwaving in milk. The corn starch is a cold water swelling, granular starch which is commercially available and sold under the name "MIRA-GEL 463 starch" and manufactured by Tate & Lyle. Mira-Gel 463 is a good binding instant corn starch and will hydrate with the syrup, form a sticky gel, and set when dry. This "instant" corn starch forms a strong gel at room temperature when hydrated. Other cold water swelling, granular starch may also be suitable having properties similar to MIRA-GEL 463.

As noted above MIRA-GEL 463 is a cold water swelling, granular starch that differs significantly from pregelatinized starches commonly used in food products. This physically modified starch readily hydrates in water at room temperatures, forming a thick, smooth consistency at first, followed by setting to a robust, firm gel structure. Conventional pregelatinized instant starches also thicken in water without heat, but none duplicate the gel forming functionality of MIRA-GEL starch.

Unlike a typical pregelatinized starch which microscopically reveals particles that are swollen, fragmented and generally amorphous, MIRA-GEL 463 particles appear as whole, intact granules. The appearance of this starch in bulk resembles that of an unmodified, common dent corn starch. MIRA-GEL 463 thickens and sets to a gel quickly using room temperature water. The gel typically sets in about 30 minutes at room temperatures. The resulting gel strength exceeds that of the conventional, cooked corn starches.

Properties such as pH and the type of sweetener used in the system influence the gel properties of MIRA-GEL 463. At a pH in the range of about 3.5 to 5.5, the gel strength increases at lower pH. The gel strength is higher in the presence of fructose than with sucrose. MIRA-GEL 463 also advantageously gelatinizes and sets when mixed with low moisture components (such as corn syrup at 20% moisture) with no more than cooking at atmospheric pressure. Conventional starches do not hydrate or cook out properly under these conditions. They require temperatures that range about 143°C (290°F).

Gels made with MIRA-GEL 463 resist flow when exposed to high heat. For example, they are heat stable, retaining form and firmness, when held at oven temperatures of 177°C (350°F) for 7-8 minutes. MIRA-GEL 463 is described in its Technical Bulletin and in U.S. Patent No. 5,093,146.

Another starch that was found to work almost as well as MIRA-GEL 463 was Instant Tenderjel 419, a waxy modified pregelatinized starch. The preferred starches used with the present invention were contrasted with other starches that did not perform as well by comparing the starches' viscosity profiles measured using a Rapid Visco Analyzer (RVA). RVA profiles can be indicative of important characteristics of the starches, such as hydration, shear thinning, gel strength, film forming, and diffusivity.

The RVA analysis was run under the following conditions: the sample was held at about 50°C for about 6 minutes, the temperature was increased to about 95°C over the following approximately 4 minutes, held at about 90°C for the following approximately 3 minutes, cooled to about 50°C over the following 3 minutes, and held at 50°C for the final 2 minute. The RVA analyses were run on a Newport Scientific Rapid Visco Analyzer, model number RVA-4. The procedure used to measure the RVA for each sample was as follows: (1) Determine moisture content of sample; (2) Determine amount of sample to add for 10% solids; (3) Tare metal sample container on balance and add determined amount of sample; (4) Add deionized water until balance reads 29g; (5) Place paddle into canister and vigorously jog blade through sample up and down 10 times. If any flour or meal lumps remain on water surface or adhere to paddle, repeat jogging action; (6) Insert plastic paddle into sample container; (7) Insert sample container with paddle into RVA; (8) Choose temperature profile described above and wait for RVA to reach set temperature; (9) Push sample container down into RVA; (10) Wait approximately 20 minutes for RVA to complete analysis. The procedure above is referred to herein as the RVA Protocol.

When the RVA profiles of the starches that worked well in accordance with the present invention are compared, they appear to have two similarities. First, the viscosity measured during the time the temperature profile was held at 95°C averaged between 2 and 3 Pa.s (2000 and 3000 centipoise). The other starches tested had average viscosity well below 2000 centipoise. Therefore, in one aspect of the invention, a starch used in accordance with the present invention will comprise an average hold viscosity of between 2 and 3 Pa.s (2000 and 3000 centipoise) under the RVA Protocol. The other characteristic shared by both desirable starches is a viscosity profile that increases to a final viscosity at the end of the analysis of greater than 5 Pa.s (5000 centipoise). The other starches comprised final viscosities below 2 Pa.s (2000 centipoise). Therefore, in another aspect of the invention, a starch used in accordance with the present invention will comprise a final viscosity of greater than 5 Pa.s (5000 centipoise) under the RVA Protocol.

Although not wishing to be bound by any theory, it is believed that that when the starch comes in contact with the syrup spray, it hydrates, starts to gel, and increases stickiness and viscosity of the syrup. This results in improved cluster formation and after drying, the bonds that hold the clusters together are very strong. The RVA profiles of the two starches that worked well with the present invention show a higher average hold and final viscosity than the other starches tested. Again, without being bound by theory, it is believed that the starch undergoes continuing retrogradation and forms a more crystalline structure during the RVA Protocol and during cluster formation, which helps maintain crunchiness of the clusters.

The benefit of these strong bonds is that in a short microwave time in milk (heat milk to 60 - 77°C (140 - 170 °F)), the bonds stay intact, the clusters don't hydrate and they maintain their crunch (most of the crunch comes from the crisp rice cereal pieces, but some also comes from breaking the bonds between granola components). The starch appears to work in conjunction with the dry dairy components (Nonfat dry milk, whey, whey protein concentrate). As noted in the technical brochure for Mira-Gel 463, combining with "cooked milk, spray dried milk solids, condensed milk, water / milk combinations form strong gels." When the dairy ingredients are removed from the crunchy granola formulation, clusters do not form.

Base mixes for crunchy granola in accordance with the present invention may contain the following:

| **Ingredient** | **Amount (wt%)** |
|---|---|
| Instant Oat Flakes | 30-80 |
| Whole Grain Wheat Flakes | 30-80 |
| Brown Rice Crisps | 4-12 |
| Whey - Spray Dried | 0-10 |
| Whey Protein Concentrate (34% protein) | 0-10 |
| Nonfat Dried Milk | 1-10 |
| Fruit or nut pieces | 0-30 |
| MIRA-GEL 463 - Corn Starch | 4-8 |
| Flavors | 0-2 |

Coating syrups for crunchy granola in accordance with the present invention may contain the following:

| **Ingredient** | **Amount (wt%)** |
|---|---|
| Water | 25-30 |
| Refiner's Molasses | 0-10 |
| Sugar - Bulk | 45-60 |
| Polysaccharide | 0-30 |
| Vegetable oil | 0-10 |
| Honey - Light Amber | 0-10 |
| Salt (sodium chloride) | 0-1.5 |
| Flavors | 0-4 |

The crunchy granola clusters may be used in a variety of products including, but not limited to those listed below. For example, the crunchy granola clusters can be used as toppings for cereals, yogurts, or other products such as ice cream, pudding, and other desserts.

### Cereal Toppings

The crunchy granola clusters may be added as a topping or part of a topping to prepared hot cereal and the granola clusters will remain crunchy for at least six minutes without getting soft.

For example, serving sizes for prepared oatmeal ranges from 100g to 500g, for example about 275g. The toppings (granola + other topping ingredients) will typically range from 10g to 40g, for example 18g.

Crunchy granola clusters may be combined with other topping ingredients. For example, the crunchy granola clusters may comprise 30% to 90% of the topping, for example 65%. Other ingredients that may be included with the topping are discussed below.

### Yogurt Toppings

The crunchy granola clusters may be added as a topping or part of a topping to yogurt and remain crunchy for at least six minutes without getting soft.

For example, serving sizes for yogurt ranges from 85.04 g (3 oz.) to 283.50g (10 oz.), for example about 170.10 g (6 oz.). The toppings (granola + other topping ingredients) will typically range from 10g to 40g, for example 18g. Yogurt and toppings are often sold in two-piece containers with the yogurt in one part or the base of the container and the topping present in another part or the top of the container.

The crunchy granola clusters may be combined with other topping ingredients. For example, the crunchy granola clusters may comprise 30% to 90% of the toppings for example 65%. Other ingredients that may be included in the topping are discussed below.

### Multi-Texture Hot Cereals

Multi-texture cereals for warm or hot consumption may be prepared by combining crunchy granola clusters as an inclusion with dry grain flakes such as oats, wheat, barley, rye, and multigrain, in single serve or multi-serve packaging to deliver multitexture hot cereal experiences. The dry grain flakes typically have a moisture level of 2%-13%, for example 11%.

For example, the crunchy granola clusters may comprise 5% to 80% of the total cereal, for example 65%. Other ingredients that may be included as inclusions are discussed below.

### Multi-Texture Cold Cereals

Multi-texture cereals consumption with cold liquids may be prepared by combining granola clusters as an inclusion with dry grain flakes such as oats, wheat, barley, rye, and multigrain, in single serve or multi-serve packaging to deliver multi-texture cold, muesli cereal. Such cereals may be eaten with cold milk or yogurt. The dry grain flakes typically have a moisture level of 2%-13%, for example 11%.

The crunchy granola clusters may comprise 5% to 80% of the total cereal, for example 35%. Other ingredients that may be included as inclusions are discussed below.

### Ready-to-Eat Cereals

Ready-to-Eat Cereal may be prepared from the crunchy granola clusters. The cereal has a more crunchy texture than other granola cereals and has a longer bowl life (stays crunchy without getting soggy when combined with cold milk or yogurt) than other granola products.

The crunchy granola clusters may comprise 50% to 100% of the total cereal, for example 85%. Other ingredients that may be included as inclusions are discussed below.

### Snack or Snack Mix

Snack or snack mixes may be prepared with the crunchy granola cluster with more crunchy texture than other granola products. Such embodiments may include use of a long chain polysaccharide in the syrup to produce a non-sweet granola that may be seasoned with salty/savory flavors or a combination of sweet and salty/savory flavors.

The crunchy granola clusters may comprise 50% to 100% of the total snack, for example 85%. Other ingredients that may be included as inclusions are discussed below.

### Additional toppings and Inclusions

In all of the aspects described above, additional toppings and inclusions may be added to the various products. These toppings and inclusions may comprise one or more of the following ingredients: This list is exemplary and not meant to be exhaustive of the types of ingredients.
i. Other cereal components such as grain cereal flakes such as wheat, corn, oat, quinoa and multigrain, other granola formulations, extruded cereal pieces, and puffed cereal pieces.
ii. Fruit including dehydrated, infused, or freeze dried fruit such as raisins, cranberries, dates, blueberries, strawberries, raspberries, peaches, cherries, apples, currants, golden raisins, bananas, apricots, pomegranate arils, blackberry, pineapple, mango, papaya, and pears.
iii. Nuts such as almonds, walnuts, pecans, hazelnuts, macadamia nuts, and peanuts.
iv. Seeds such as pumpkin seeds, flaxseeds, chia seeds, poppy seeds, sunflower seeds, caraway, and sesame.
v. Other such as chocolate chunks/chips/shavings, peanut butter chunks/chips/shavings, streusel, dried coconut, lavender, and candied orange peel.
vi. Coated inclusions such as any of the above inclusions or granola coated in a shelf stable chocolate coating, peanut butter coating, yogurt coating, and fruit coating.

### Crunchy and Creamy Hot Cereal

The present invention is also directed to a granola cereal product formed from the combination of two types of granola ingredients suitable for heating in a microwave oven. The first type is the crunchy granola clusters and the second type of granola ingredient is a creamy granola blend formed by combining a granola dry mix with sodium bicarbonate as a dry component. The sodium bicarbonate helps soften the granola when liquid and heat is applied. The resulting granola cereal product contains granola clusters which stay crunchy in hot milk and granola blend which softens in hot milk.

It was also discovered that one could quickly hydrate and soften the texture of granola with sodium bicarbonate in order to "instantize" a cereal product that is intended to be microwaved and served hot. Sodium bicarbonate is commonly used to leaven and to soften texture of baked goods and some cereals, but its use as a dry powder addition to rapidly hydrate and soften granola in a product heated by a microwave was previously unknown.

It is noted that the same process may be used to produce both the crunchy clusters and the creamy granola. The difference being the ingredients added to the batch mixer at the beginning of the process and the size of the granola pieces at the end of the process. For instance, for crunchy granola clusters, a pre-gelatinized starch is added along with the protein ingredients and clusters are formed. For creamy granola, sodium bicarbonate is added along with the protein ingredients.

### Creamy Granola

Thus the creamy granola may be prepared following the process described for FIG. 1 using sodium bicarbonate but not corn starch. That is, creamy granola is formulated in a manner similar to crunchy granola except that instead of a starch component, dry (powder) sodium bicarbonate (baking soda), is used to improve hydration and reduce hydration time of the creamy granola. The addition of sodium bicarbonate results in a soft, creamier texture. The granola intended as creamy granola is typically 4.7 to 12.7 mm (3/16 to 1/2 inch), in size.

Tests conducted by adding sodium bicarbonate to both the syrup and the dry mix showed that the texture of the granola was softer and hydrated more quickly than when sodium bicarbonate was not used. Thus a benefit is to provide a granola product that hydrates very quickly in a short microwave time with milk (heating milk to 60 - 77°C (140 - 170°F)).

Base mixes for creamy granola in accordance with the present invention may contain the following:

| Ingredient | Amount (wt%) |
|---|---|
| Instant Oat Flakes | 90-99.5 |
| Whey - Spray Dried | 0-10 |
| Whey Protein Concentrate (34% protein) | 0-10 |
| Flavor | 0-2 |
| Sodium Bicarbonate | 0.5-1.5 |

Coating syrups for creamy granola in accordance with the present invention may contain the following:

| **Ingredient** | **Amount (wt%)** |
|---|---|
| Water | 15-25 |
| Refiner's Molasses | 0-10 |
| Sugar - Bulk | 35-70 |
| Vegetable Oil | 10-30 |
| Salt (sodium chloride) | 0-1.5 |
| Flavors | 0-5 |

The syrup for the crunchy granola or creamy granola may be typical syrups containing water, molasses, sugar, corn syrup, vegetable oils, honey, and salt. Suitable, vegetable oils include canola oil, safflower oil, corn oil, soybean oil, sesame oil, palm oil, cottonseed oil, sunflower oil, and coconut oil.

Suitable flavors may be added to the syrup such as, but not limited to, honey, cinnamon, chocolate, vanilla, and fruit flavors such as apples, peaches, blueberries, coconut, sweet brown flavors such as maple, caramel, and honey, nut flavors, butter flavors, and cream or other dairy flavors.

Other ingredients for the syrup may include corn syrup, maltodextrin, or other sugars such as glucose, maltose, fructose, and sucrose.

Other ingredients for the base mixture include nuts and fruit pieces.

### Crunchy Granola and Creamy Granola Product

The crunchy granola and creamy granola are combined along with any fruits and/or chopped nuts to form a cereal product. Alternatively, fruits or nuts may be added to the dry mix used to create the crunchy and creamy granola clusters.

| **Ingredient** | **Amount (wt%)** |
|---|---|
| Crunchy Granola | 50-70 |
| Creamy Granola | 30-50 |
| Fruits or Nuts | 0-10 |

Suitable dried fruits may be added to the cereal such as, but not limited to, cranberries, apples, blueberries, apricots, raisins, coconut, and the like. Suitable nuts include, but are not limited to almonds, walnuts, and peanuts. Other additives may be chocolate chips or chunks, caramel pieces, or peanut butter chips.

Suitable flavor/fruit/nut combinations include, for example, honey & almond, apple cinnamon, and cranberry & almond.

The single serve package may contain any suitable amount of cereal but generally the package will containing 45-50 grams of cereal having 250 or fewer calories, 5 grams of protein, and 3-4 grams of fiber. Larger multiserving containers may also contain larger amounts of cereal.

The consumer adds the cereal to a bowl, adds a liquid (typically water, milk, or milk alternative such as almond or soy milk) and then heats in the microwave oven for generally for at least 20 seconds and up to 1 minute, for example 25 to 30 seconds, depending on the wattage of the microwave oven. The milk may be whole milk, 2%, 1%, or fat-free or skim milk. The crunchy granola clusters stay crunchy for at least six minutes.

As used in this disclosure, unless otherwise specified, the term "mix", "mixing", "added", "adding", "combined", or "combining" and like terms means that the multiple ingredients or components referred to are combined in any manner and in any order, with or without stirring or the like, etc.

### Example 1

A cereal product was prepared containing crunchy granola clusters, creamy granola, and dried apple pieces.

The crunchy granola clusters were prepared by combining coating syrup (1) and base mix (1) and forming the clusters in accordance with the method of Fig. 1.

The coating syrup (I) was prepared with the following ingredients and had a moisture level of 32.7 wt%:

| **Ingredient** | **Amount (wt%)** |
|---|---|
| Water | 30.3 |
| Refiner's Molasses | 5.9 |
| Sugar-Bulk | 53.2 |
| High Oleic Low Linolenic Canola Oil w/ mixed Tocopherols | 5.7 |
| Honey - Light Amber | 2.1 |
| Salt (sodium chloride) | 1.0 |
| Cinnamon | 0.3 |
| Apple Flavor | 1.5 |
| Total | 100 |

The base mix (I) was prepared with the following ingredients and had a moisture level of 9.4 wt%:

| **Ingredient** | **Amount (wt %)** |
|---|---|
| Instant Oat Flakes | 38 |
| Whole Grain Wheat Flakes | 38 |
| Brown Rice Crisps | 8 |
| Whey - Spray Dried | 6.3 |
| Whey Protein Concentrate (34% protein) | 2.7 |
| Coconut | 0.5 |
| MIRA-GEL 463 - Corn Starch | 6 |
| Cinnamon, ground | 0.5 |
| Total | 100 |

The coating syrup (I) was combined with the dry base mix (I) to form a granola mixture having a moisture level of 16.2 %. This mixture was formed into a slab, dried in an oven to a moisture level of 2.5 wt%, and rolled and screened as shown in FIG. 1 to form the crunchy granola clusters.

| **Ingredient** | **Amount (wt%)** |
|---|---|
| Coating syrup (I) | 29 |
| Base Mix (I) | 71 |
| Total | 100 |

The creamy granola was prepared by combining coating syrup (II) and base mix (II).

The coating syrup (II) was prepared with the following ingredients and had a moisture level of 22.7 wt%:

| **Ingredient** | **Amount (wt%)** |
|---|---|
| Water | 21.2 |
| Refiner's Molasses | 2.6 |
| Sugar-Bulk | 52.5 |
| High Oleic Low Linolenic Canola Oil w/ mixed Tocopherols | 20.3 |
| Salt (sodium chloride) | 0.9 |
| Cinnamon | 0.5 |
| Apple Flavor | 2.0 |
| Total | 100 |

The base mix (II) was prepared with the following ingredients and had a moisture level of 9.5 wt%:

| **Ingredient** | **Amount (wt%)** |
|---|---|
| Instant Oat Flakes | 94.1 |
| Whey - Spray Dried | 2.8 |
| Whey Protein Concentrate (34% protein) | 1.2 |
| Cinnamon, ground | 1.0 |
| Sodium Bicarbonate | 0.9 |
| Total | 100 |

The coating syrup (II) was combined with dry base mix (II) and had a moisture content of 12.8 wt% to form a granola mixture. This mixture was formed into a slab, dried in an oven to a moisture level of 2.5 wt%, and rolled and screened as shown in FIG. 1 to form the creamy granola.

| **Ingredient** | **Amount (wt%)** |
|---|---|
| Coating syrup (II) | 25 |
| Base Mix (II) | 75 |
| Total | 100 |

The finished cereal product was prepared by combining the crunchy granola, the creamy granola, and dried apple pieces in a single serve pouch.

| **Ingredient** | **Amount (wt%)** |
|---|---|
| Crunchy Granola Clusters | 57.6 |
| Creamy Granola | 38.4 |
| Dried Apple Pieces | 4.0 |
| Total | 100 |

### Example 2

Crunchy granola cluster binding was tested by adding 1/3 cup milk to 50 g granola and microwaved for 30 seconds in a 1100W microwave. The product was consumed immediately and evaluated blind using a qualitative crunch scoring system. On a scale of 1-10, MIRA-GEL 463 provided a granola cluster having a crunch score of 10. The Mira-GEL 463 provided medium clusters having a nice dark golden brown color. The binding syrup looked more crystalline / solid / caramelized. The clusters were hard to break apart. The clusters are more round than irregular and appear to be made up of multiple layers of particles - It is believed that this structure may contribute to crunchiness. The clusters were very crunchy / somewhat hard clusters and the crunch lasted for 6-7 minutes in the milk.

### Example 3

Different levels of MIRA-GEL 463 were tested in a crunchy granola formulation. Crunchy granola cluster binding was tested by adding 1/4 cup milk to 45 g granola and microwaved (1100 W) for 25 seconds. Samples were subjected to the same blind, qualitative evaluation for crunchiness over time.

| Crunch Score (1-10) | | | | | | | | |
|---|---|---|---|---|---|---|---|---|
| MIRA-GEL 463 | 0 min | 1 min | 2 min | 3 min | 4 min | 5 min | 6 min | Comments |
| None | 8 | 7 | 5 | 2 | 1 | 0 | | Soggy at 3 min |
| 3% | 9 | 8 | 6 | 6 | 4 | 4 | 1 | Mostly soggy at 4 min, but some crunch; soggy at 6 min |
| 6% | 10 | 8 | 8 | 8 | 8 | 5 | 5 | hard initially; at ∼ 4 min, there is a mix of crunchy and mushy pieces, but still mostly crunchy |
| 9% | 10 | 9 | 8 | 8 | 6 | 5 | 5 | at ∼4 min. there is a mix of crunchy and mushy, but still mostly crunchy |

FIG. 3 depicts a graphical representation of the bowl life of hot granola having various amounts of MIRA-GEL 463, with line 60 representing the control, line 62 representing 3% MIRA-GEL 463, line 64 representing 6% MIRA-GEL 463, and line 66 representing 9% MIRA-GEL 463.

### Example 4

A creamy/ bulky texture evaluation was performed. Creamy granola having crunchy clusters was tested by adding 1/4 cup 2% milk to 45 g granola and microwaved for 25 seconds in a 1100W microwave. The product was consumed immediately. The evaluation tested granola prepared with sodium bicarbonate as a dry ingredient.

| | **Evaluation** |
|---|---|
| 50% *Granola* no Fat 50% Crunchy Granola Maple Flavor | Texture is right on target with nice creamy matrix mixed with crunchy clusters; Must let sit 1 minute to thicken; Tried 30 seconds in microwave and it performed better at absorbing milk and crunch was not sacrificed |
| 50% Cinnamon *Granola* 50% Crunchy Granola | Absorbed ∼95% of milk after sitting for 1 minute; Excellent texture of creamy base with crunchy clusters; |
| 50% - Crunchy Syrup *Granola* Formula 50% - Crunchy Granola | Absorbs ∼95% of milk after 1 minute; |
| 50% - Increased Soda *Granola* 50% - Crunchy Granola | Absorbs ∼95% of milk after 1 minute; nice texture |
| 50% - No Soda Creamy Granola 50% - Crunchy Granola | Loose milk in bowl after 2 minutes; absorbs ∼75% of milk |

| | |
|---|---|
| *Granola* is granola prepared with sodium bicarbonate | |

Tests revealed that sodium bicarbonate was required for rapid milk absorption with no loose milk.

While this disclosure mentions specific examples and embodiments, those skilled in the art will appreciate that there are numerous variations and modifications within the invention as set forth in the appended claims. Each word and phrase used in the claims is intended to include all its dictionary meanings consistent with its usage in this disclosure and/or with its technical and industry usage in any relevant technology area. The word "comprising" is used in the claims to have its traditional, open-ended meaning, that is, to mean that the product or process defined by the claim may optionally also have additional features, elements, etc. beyond those expressly recited in the claim.

## Claims

1. Crunchy granola clusters comprising flakes from at least one grain, crisps from at least one grain, at least one protein, wherein the protein is selected from the group consisting of whey, whey protein concentrate, nonfat dried milk and combinations thereof, a starch, and coating syrup coating the clusters;
wherein the starch and coating syrup act as binder for the clusters,
wherein the starch is cold water swelling and granular, and wherein the starch has an average hold viscosity of between 2 and 3 Pa.s (2000 and 3000 centipoise) and a final viscosity of greater than 5 Pa.s (5000 centipoise) when measured using the RVA Protocol as described herein.

2. The crunchy granola clusters according to claim 1 wherein the syrup comprises a long chain polysaccharide, wherein the syrup comprises up to 30% by weight of the clusters, optionally wherein the long chain polysaccharide is selected from the group consisting of polydextrose, maltodextrin, oligofructose, inulin, or corn syrup solids.

3. The crunchy granola clusters according to claim 1 wherein (a) the flakes are selected from the group consisting of oat, wheat, corn, rye triticale, barley, quinoa and any combination thereof, or (b) the flakes are oat flakes and, optionally, wheat flakes.

4. A topping comprising the crunchy granola clusters according to claim 1 wherein the topping is a cereal topping and the clusters remain crunchy while in contact with a liquid for at least six minutes without getting soft, or wherein the topping is a yogurt topping and the clusters remain crunchy in contact with said yogurt for at least six minutes without getting soft.

5. The cereal or yogurt topping according to claim 4 wherein the topping comprises 30% to 90% crunchy granola clusters.

6. An oatmeal product comprising oatmeal prepared with a hot liquid and further comprising the cereal topping according to claim 4.

7. A yogurt product comprising yogurt and the yogurt topping according to claim 4.

8. A multi-texture cereal comprising the crunchy granola clusters according to claim 1 and dry grain flakes, wherein the dry grain flakes have a moisture level of 2%-13% by weight.

9. The multi-texture cereal according to claim 8 wherein the dray grain flakes are selected from the group consisting of oats, wheat, barley, rye, quinoa and multigrain.

10. The multi-texture cereal according to claim 8 wherein the crunchy granola clusters comprise 5% to 80% of the multi-texture cereal.

11. A ready to eat cereal comprising the crunchy granola clusters according to claim 1 wherein the crunchy granola clusters comprise 50% to 100% of the cereal.

12. A microwavable crunchy and creamy granola cereal comprising
a) crunchy granola according to claim 1; and
b) creamy granola comprising flakes from at least one grain, at least one protein, sodium bicarbonate, and syrup; and
c) optionally at least one of fruits or nuts.

13. The granola cereal according to claim 12 wherein (i) the flakes in a) and b) are each selected from the group consisting of oat, wheat, corn, rye triticale, barley, and any combination thereof, or (ii) the flakes in a) are oat flakes and, optionally, wheat flakes.

14. The granola cereal according to claim 12 wherein the protein in b) is selected from the group consisting of whey, whey protein concentrate, nonfat dried milk, and combinations thereof.

15. The granola cereal according to claim 12 wherein the cereal comprises 50 to 70 wt% crunchy granola clusters, 30 to 50 wt% creamy granola, and 0 to 10 wt% fruits or nuts.

16. A method of preparing a microwavable crunchy and creamy granola cereal comprising:
a) forming crunchy granola clusters by combining dry ingredients comprising flakes from at least one grain, crisps from at least one grain, at least one protein, wherein the protein is selected from the group consisting of whey, whey protein concentrate, nonfat dried milk and combinations thereof, and a cold water-swelling granular starch that has an average hold viscosity of between 2 and 3 Pa.s (2000 and 3000 centipoise) and a final viscosity of greater than 5 Pa.s (5000 centipoise) when measured using the RVA Protocol as described herein, with coating syrup coating the clusters; and
b) forming creamy granola by combining dry ingredients comprising flakes from at least one grain, at least one protein, and sodium bicarbonate, with syrup; and
c) combining the crunchy granola clusters, creamy granola, and optionally at least one of fruits or nuts.

## Patentansprüche

1. Knusprige Müsliklumpen, bestehend aus Flocken von mindestens einem Getreide, Chips von mindestens einem Getreide, mindestens einem Protein - wobei das Protein aus einer Gruppe ausgewählt wird, die aus Molke, Molkeproteinkonzentrat, Magermilchpulver und Kombinationen davon besteht - einer Stärke und einem Beschichtungssirup zur Beschichtung der Klumpen;
wobei die Stärke und der Beschichtungssirup als Bindemittel für die Klumpen dienen, wobei es sich bei der Stärke um kaltwasserquellende und körnerförmige Stärke handelt und wobei die Stärke bei Messung mithilfe des hier beschriebenen RVA-Protokolls eine durchschnittliche Halteviskosität von 2 bis 3 Pa.s (2000 bis 3000 Centipoise) und eine Endviskosität von mehr als 5 Pa.s (5000 Centipoise) aufweist.

2. Die knusprigen Müsliklumpen gemäß Anspruch 1, wobei der Sirup aus einem langkettigen Polysaccharid besteht, wobei der Sirup bis zu 30 % des Gewichts der Klumpen ausmacht und wobei wahlweise das langkettige Polysaccharid aus einer Gruppe ausgewählt wird, die aus Polydextrose, Maltodextrin, Oligofructose, Inulin oder Maissirup-Feststoffen besteht.

3. Die knusprigen Müsliklumpen gemäß Anspruch 1, wobei (a) die Flocken aus einer Gruppe ausgewählt werden, die aus Hafer, Weizen, Mais, Roggen, Triticale, Gerste, Quinoa und jeder Kombination davon besteht, oder (b) es sich bei den Flocken um Hafer- und wahlweise Weizenflocken handelt.

4. Eine Deckschicht für die knusprigen Müsliklumpen gemäß Anspruch 1, wobei es sich bei der Deckschicht um eine Zerealiendeckschicht handelt und die Klumpen bei Kontakt mit einer Flüssigkeit mindestens sechs Minuten lang knusprig bleiben, ohne aufzuweichen, oder wobei es sich bei der Deckschicht um eine Joghurtdeckschicht handelt und die Klumpen bei Kontakt mit besagtem Joghurt mindestens sechs Minuten lang knusprig bleiben, ohne aufzuweichen.

5. Die Zerealien- oder Joghurtdeckschicht gemäß Anspruch 4, wobei die Deckschicht zu 30 % bis 90 % aus knusprigen Müsliklumpen besteht.

6. Ein Hafermehl-Produkt, das aus Hafermehl besteht, welches mit einer heißen Flüssigkeit zubereitet wird, und zusätzlich die Zerealiendeckschicht gemäß Anspruch 4 umfasst.

7. Ein Joghurt-Produkt, das aus Joghurt und der Joghurtdeckschicht gemäß Anspruch 4 besteht.

8. Eine Multitextur-Zerealie, bestehend aus den knusprigen Müsliklumpen gemäß Anspruch 1 und trockenen Getreideflocken, wobei die trockenen Getreideflocken eine Feuchtigkeit von 2 bis 13 Gewichtsprozent aufweisen.

9. Die Multitextur-Zerealie gemäß Anspruch 8, wobei die trockenen Getreideflocken aus einer Gruppe ausgewählt werden, die aus Hafer, Weizen, Gerste, Roggen, Quinoa und Mehrkorn besteht.

10. Die Multitextur-Zerealie gemäß Anspruch 8, wobei die knusprigen Müsliklumpen 5 % bis 80 % der Multitextur-Zerealie ausmachen.

11. Eine verzehrfertige Zerealie, bestehend aus den knusprigen Müsliklumpen gemäß Anspruch 1, wobei die knusprigen Müsliklumpen 50 % bis 100 % der Zerealie ausmachen.

12. Eine in der Mikrowelle aufwärmbare knusprige und cremige Müslizerealie, bestehend aus
a) knusprigem Müsli gemäß Anspruch 1; und
b) cremigem Müsli, bestehend aus Flocken von mindestens einem Getreide, mindestens einem Protein, Natriumbikarbonat und Sirup; und
c) wahlweise mindestens einer Sorte Obst oder Nüsse.

13. Die Müslizerealie gemäß Anspruch 12, wobei (i) die Flocken in a) und b) jeweils aus einer Gruppe ausgewählt werden, die aus Hafer, Weizen, Mais, Roggen, Triticale, Gerste, Quinoa und jeder Kombination davon besteht, oder (ii) es sich bei den Flocken in a) um Hafer- und wahlweise Weizenflocken handelt.

14. Die Müslizerealie gemäß Anspruch 12, wobei das Protein in b) aus einer Gruppe ausgewählt wird, die aus Molke, Molkeproteinkonzentrat, Magermilchpulver und Kombinationen davon besteht.

15. Die Müslizerealie gemäß Anspruch 12, wobei die Zerealie zu 50 bis 70 Gewichtsprozent aus knusprigen Müsliklumpen, zu 30 bis 50 Gewichtsprozent aus cremigem Müsli und zu 0 bis 10 Gewichtsprozent aus Obst oder Nüssen besteht.

16. Ein Verfahren zur Zubereitung einer in der Mikrowelle aufwärmbaren knusprigen und cremigen Müslizerealie, bestehend aus Folgendem:
a) Bildung von knusprigen Müsliklumpen durch Kombination von trockenen Zutaten, bestehend aus Flocken von mindestens einem Getreide, Chips von mindestens einem Getreide, mindestens einem Protein - wobei das Protein aus einer Gruppe ausgewählt wird, die aus Molke, Molkeproteinkonzentrat, Magermilchpulver und Kombinationen davon besteht - und einer kaltwasserquellenden, körnerförmigen Stärke mit einer durchschnittlichen Halteviskosität von 2 bis 3 Pa.s (2000 bis 3000 Centipoise) und einer Endviskosität von mehr als 5 Pa.s (5000 Centipoise) bei Messung mithilfe des hier beschriebenen RVA-Protokolls, mit einem Beschichtungssirup zur Beschichtung der Klumpen; und
b) Bildung von cremigem Müsli durch Kombination von trockenen Zutaten, bestehend aus Flocken von mindestens einem Getreide, mindestens einem Protein und Natriumbikarbonat, mit Sirup; und
c) Kombination der knusprigen Müsliklumpen, des cremigen Müslis und wahlweise mindestens einer Sorte Obst oder Nüsse.

## Revendications

1. Des pépites de céréales croquantes de type granola comprenant des flocons provenant d'un ou plusieurs grains, des éléments croustillants provenant d'un ou plusieurs grains, une ou plusieurs protéines, dans lesquelles la protéine est sélectionnée dans le groupe constitué par du petit lait, un concentré de protéine du petit lait, du lait en poudre sans matière grasse et des combinaisons de ces derniers, un amidon et un sirop d'enrobage enrobant les pépites de céréales ;
dans lesquelles l'amidon et le sirop d'enrobage servent de liant aux pépites de céréales,
dans lesquelles l'amidon est un amidon granulaire et gonflant à froid, et
dans lesquelles l'amidon a une viscosité de maintien moyenne comprise entre 2 et 3 Pa.s (2000 et 3000 centipoises) et une viscosité finale supérieure à 5 Pa.s (5000 centipoises) lorsqu'elle est mesurée à l'aide du Protocole RVA décrit ici.

2. Les pépites de céréales croquantes de type granola selon la revendication 1 dans lesquelles le sirop comprend un polysaccharide à chaîne longue, dans lesquelles le sirop comprend jusqu'à 30% en poids des pépites de céréales, en option dans lesquelles le polysaccharide à chaîne longue est sélectionné dans le groupe constitué par le polydextrose, la maltodextrine, l'oligofructose, l'inuline ou des solides dérivés de sirop de maïs.

3. Les pépites de céréales croquantes de type granola selon la revendication 1 dans lesquelles (a) les flocons sont sélectionnés dans le groupe constitué par l'avoine, le blé, le maïs, le triticale de seigle, l'orge, et une combinaison quelconque de ces derniers ou (b) les flocons sont des flocons d'avoine et, en option, des flocons de blé.

4. Une garniture comprenant les pépites de céréales croquantes de type granola selon la revendication 1 dans laquelle la garniture des céréales et les pépites de céréales restent croquantes pendant qu'elles sont en contact avec un liquide pendant au moins six minutes sans se ramollir, ou dans laquelle la garniture est une garniture de yaourt et les pépites de céréales restent croquantes pendant qu'elles sont en contact avec ledit yaourt pendant au moins six minutes sans se ramollir.

5. La garniture des céréales selon la revendication 4 dans laquelle la garniture comprend entre 30% et 90% de pépites de céréales croquantes de type granola.

6. Un produit à base de flocons d'avoine comprenant des flocons d'avoine préparés avec un liquide chaud et comprenant en outre la garniture selon la revendication 4.

7. Un produit de yaourt comprenant du yaourt et la garniture de yaourt selon la revendication 4.

8. Une céréale à textures multiples comprenant les pépites de céréales croquantes de type granola selon la revendication 1 et des flocons de grains secs, dans laquelle les flocons de grains secs ont un teneur en humidité comprise entre 2% et 13% en poids.

9. La céréale à textures multiples selon la revendication 8 dans laquelle les flocons de grains secs sont sélectionnés dans le groupe constitué par l'avoine, le blé, l'orge, le seigle, le quinoa et une céréale multigrain.

10. La céréale à textures multiples selon la revendication 8 dans laquelle les pépites de céréales croquantes de type granola comprennent entre 5% et 80% de la céréale à textures multiples.

11. Une céréale prête à la consommation céréale comprenant les pépites de céréales croquantes de type granola selon la revendication 1 dans laquelle les pépites de céréales croquantes de type granola comprennent entre 50% et 100% de la céréale.

12. Une céréale croquante et crémeuse de type granola pouvant être mise dans un four à micro-ondes comprenant :
a) des éléments croquants de type granola selon la revendication 1 ; et
b) des éléments crémeux de type granola provenant d'un ou plusieurs grains, une ou plusieurs protéines, du bicarbonate de soude et un sirop ; et
c) en option, soit des fruits, soit des fruits à coque.

13. La céréale de type granola selon la revendication 12 dans laquelle (i) les flocons dans a) et b) sont chacun sélectionnés dans le groupe constitué par l'avoine, le blé, le maïs, le triticale de seigle, l'orge, et une combinaison quelconque de ces derniers, ou (ii) les flocons dans a) sont des flocons d'avoine et, en option, des flocons de blé.

14. La céréale de type granola selon la revendication 12 dans laquelle la protéine dans b) est sélectionnée dans le groupe constitué par du petit lait, un concentré de protéine du petit lait, du lait en poudre sans matière grasse, et des combinaisons de ces derniers.

15. La céréale de type granola selon la revendication 12 dans laquelle la céréale comprend entre 50 et 70% en poids de pépites de céréales croquantes de type granola, entre 30 et 50% en poids d'éléments crémeux de type granola et entre 0 et 10 en poids de fruits ou de fruits à coque.

16. Un procédé de préparation d'une céréale croquante et crémeuse de type granola pouvant être mise dans un four à micro-ondes consistant à :
a) former des pépites de céréales croquantes de type granola en combinant les ingrédients secs comprenant des flocons provenant d'un ou plusieurs grains, des éléments croustillants provenant d'un ou plusieurs grains, une ou plusieurs protéines et un amidon granulaire gonflant à froid qui a une viscosité de maintien moyenne comprise entre 2 et 3 Pa.s (2000 et 3000 centipoises) et une viscosité finale supérieure à 5 Pa.s (5000 centipoises) lorsqu'elle est mesurée à l'aide du Protocole RVA décrit ici, avec un sirop d'enrobage enrobant les pépites de céréales ; et
b) former des éléments crémeux de type granola en combinant les ingrédients secs comprenant des flocons provenant d'un ou plusieurs grains, avec une ou plusieurs protéines et du bicarbonate de soude, avec un sirop ; et
c) combiner les pépites de céréales croquantes de type granola, des éléments crémeux de type granola et, en option, soit des fruits, soit des fruits à coque.
